# EUROPEAN PATENT APPLICATION

(11) **EP 4 703 018 A1**
(43) Date of publication of application: **04.03.2026**
(21) Application number: 24386101.0
(22) Date of filing: 27.08.2024
(51) Int. Cl.: A63F 13/285, A63F 13/24, A63F 13/214, A63F 13/218, G06F 3/01, G06F 3/0354, G06F 3/041

(54) **AN ADAPTABLE SURFACE FOR AN ENTERTAINMENT SYSTEM**

(71) Applicant: Sony Interactive Entertainment Inc., Tokyo 108-0075 (JP)
(72) Inventor: Michailidis, Lazaros, London, W1F 7LP (GB); Eder, Michael, London, W1F 7LP (GB); Quiros, Estefania Rodriguez, London, W1F 7LP (GB); Downey, Richard Thomas, London, W1F 7LP (GB); Stemple, Lloyd Preston, London, W1F 7LP (GB); Kameoka, Shinpei, London, W1F 7LP (GB)
(74) Representative: D Young & Co LLP

(57) **Abstract**

An adaptable surface for a videogame system is provided in accordance with the present disclosure, the adaptable surface comprising: a first surface layer having one or more physical parameters adaptable in response to in-game conditions, wherein the one or more physical parameters include at least a resistance to deformation of the adaptable surface.

## Description

### BACKGROUND

### Field of the Disclosure

The present disclosure relates to an adaptable surface for an entertainment system.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

In some situations, when using a computer system such as an entertainment system, it may be desirable to provide certain physical feedback to a user of the computer system. Providing physical feedback to a user of the computer system can increase a sense of immersion when using the computer system. For example, in the context of an entertainment system, it may be desirable to provide a player with physical feedback in response to certain on-screen action. However, it can be difficult to provide a realistic physical feedback.

While it is common to provide haptic feedback or the like, such as vibrations generated by a peripheral device, this may not be considered satisfactory in a number of implementations. While cost-effective and easy to implement, vibrations are not able to simulate all of the physical sensations that may be desired alongside a particular on-screen action.

Meanwhile, other typical feedback devices are often bulky and expensive, utilising a combination of hydraulic or pneumatic pistons or rams. This makes such feedback devices unsuitable for use in a significant number of situations where their use may be desired. In particular, these typical feedback devices may be unsuitable for use with virtual reality headsets, as there is a risk of injury if, for example, a hand or finger becomes trapped in the feedback device.

It is an aim of the present disclosure to address these issues.

### SUMMARY

A brief summary of the present disclosure is provided hereinafter to provide a basic understanding related to certain aspects of the present disclosure.

Embodiments of the present disclosure are defined by the independent claims. Further aspects of the disclosure are defined by the dependent claims.

In accordance with embodiments of the disclosure, improved physical feedback can be provided, increasing the sense of immersion of a user. Moreover, this physical feedback can be provided by a device which is less bulky and expensive than a conventional feedback device.

The present disclosure is not particularly limited to these advantageous technical effects. Other technical effects will become apparent for the skilled person when reading the disclosure.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 illustrates an apparatus in accordance with embodiments of the disclosure;
Figure 2 illustrates an entertainment system in accordance with embodiments of the disclosure;
Figure 3 illustrates an adaptable surface in accordance with embodiments of the disclosure;
Figure 4 illustrates an example situation in accordance with embodiments of the disclosure;
Figure 5 illustrates a first layer of an adaptable surface in accordance with embodiments of the disclosure;
Figure 6 illustrates a first layer of an adaptable surface in accordance with embodiments of the disclosure;
Figure 7 illustrates an adaptable surface in accordance with embodiments of the disclosure;
Figure 8 illustrates a surface topology in accordance with embodiments of the disclosure;
Figure 9 illustrates a first surface in accordance with embodiments of the disclosure;
Figure 10 illustrates an adaptable surface in accordance with embodiments of the disclosure.

### DESCRIPTION OF THE EMBODIMENTS:

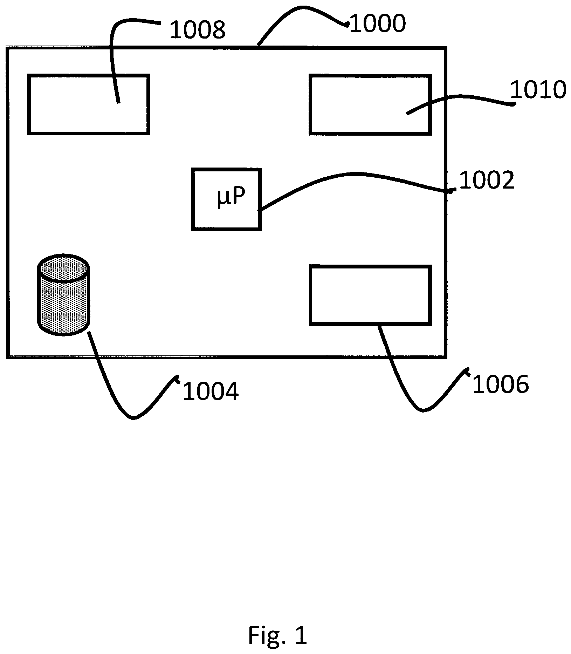

Referring to Figure 1, an apparatus 1000 (an example of an information processing device) according to embodiments of the disclosure is shown. Typically, an apparatus 1000 according to embodiments of the disclosure is a computer device such as a personal computer, an entertainment system or video game console, or a terminal connected to a server. Indeed, in embodiments, the apparatus may also be a server. The apparatus 1000 is controlled using a microprocessor or other processing circuitry 1002. In some examples, the apparatus 1000 may be a portable computing device such as a mobile phone, laptop computer or tablet - computing device.

The processing circuitry 1002 may be a microprocessor carrying out computer instructions or may be an Application Specific Integrated Circuit. The computer instructions are stored on storage medium 1004 which maybe a magnetically readable medium, optically readable medium or solid state type circuitry. The storage medium 1004 may be integrated into the apparatus 1000 or may be separate to the apparatus 1000 and connected thereto using either a wired or wireless connection. The computer instructions may be embodied as computer software that contains computer readable code which, when loaded onto the processor circuitry 1002, configures the processor circuitry 1002 to perform a method according to embodiments of the disclosure.

Additionally, an optional user input device 1006 is shown connected to the processing circuitry 1002. The user input device 1006 may be a touch screen or may be a mouse or stylist type input device. The user input device 1006 may also be a keyboard, controller, or any combination of these devices. In some examples, the user input device 1006 may be a microphone or other device. The user to may then provide input via sounds or speech.

A network connection 1008 may optionally be coupled to the processor circuitry 1002. The network connection 1008 may be a connection to a Local Area Network or a Wide Area Network such as the Internet or a Virtual Private Network or the like. The network connection 1008 may be connected to a server allowing the processor circuitry 1002 to communicate with another apparatus in order to obtain or provide relevant data. The network connection 1002 may be behind a firewall or some other form of network security.

Additionally, shown coupled to the processing circuitry 1002, is a display device 1010. The display device 1010, although shown integrated into the apparatus 1000, may additionally be separate to the apparatus 1000 and may be a monitor or some kind of device allowing the user to visualize the operation of the system (e.g. a display screen or a head mounted display). In addition, the display device 1010 may be a printer, projector or some other device allowing relevant information generated by the apparatus 1000 to be viewed by the user or by a third party.

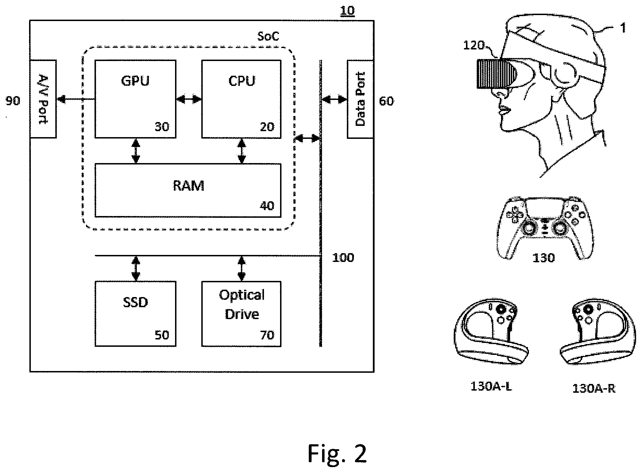

Consider, now, Figure 2 of the present disclosure. Figure 2 illustrates an example of an entertainment system.

The entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L,R) in the case of the HMD.

### <Adaptable Surface>

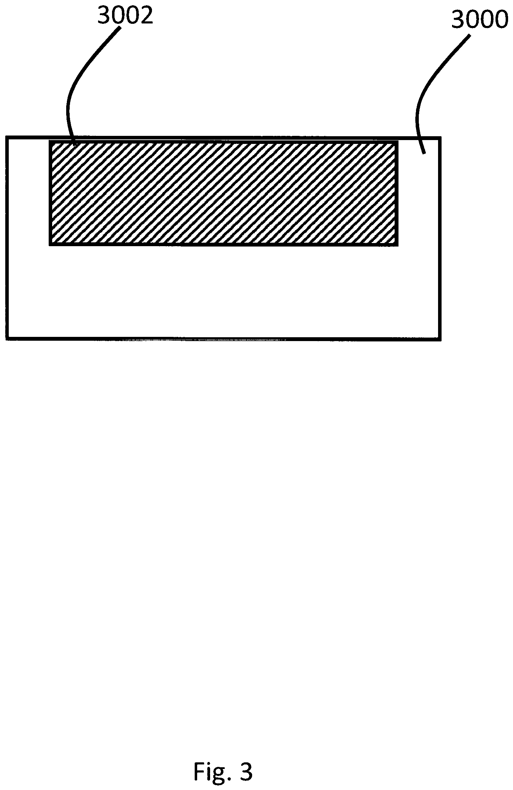

Turning, now, to Figure 3 of the present disclosure, an adaptable surface in accordance with embodiments of the disclosure is illustrated.

The adaptable surface 3000 illustrated in Figure 3 is an adaptable surface for an entertainment system (such as the entertainment system 10 as described with reference to Figure 2 of the present disclosure). The adaptable surface 3000 comprises a first surface layer 3002 having one or more physical parameters adaptable in response to in-game conditions, wherein the one or more physical parameters include at least a resistance to deformation of the adaptable surface.

In examples, the resistance to deformation of the adaptable surface includes a resistance to deformation of the adaptable surface in a direction perpendicular to a plane of the surface. In examples, a change in the resistance to deformation of the adaptable surface includes an increase, or decrease, in the hardness of the surface. It will be appreciated that a decrease in the hardness of the surface can also be described as an increase in the softness of the surface. Likewise, it will be appreciated that an increase in the hardness of the surface can also be described as a decrease in the softness of the surface.

Adaptation of the one or more physical parameters of the first surface layer in response to in-game conditions can therefore provide a physical feedback to the user.

In examples, the adaptable surface may include a control unit (not shown) configured to control the one or more physical parameters of the surface in response to the in-game conditions. In examples, control of the one or more physical parameters of the surface may be made by a control unit (not shown) external to the adaptable surface and which is communicatively coupled to the adaptable surface. In examples, control of the one or more physical parameters of the surface may be performed by the entertainment system (for instance, using a CPU such as the CPU 20 of Figure 2 to implement the control unit functionality). In examples, control of the one or more physical parameters of the surface may be performed by a server.

When control of the one or more physical parameters is performed by a control unit external to the adaptable surface, the adaptable surface may receive an instruction concerning a setting of the one or more physical parameters of the surface. The instruction may include an absolute value of the one or more physical parameters. Alternatively, the instruction may include a relative value of the one or more physical parameters (e.g. a value relative to a current value of the one or more physical parameters of the surface). On the other hand, when a control unit of the adaptable surface is configured to control the one or more physical parameters of the surface, the adaptable surface may receive information concerning the in-game conditions (e.g. from the entertainment system) and may determine an appropriate value of the one or more physical parameters on the basis of this information. Thus, the control unit (an example of a determining unit as described later) can be provided as part of the adaptable surface or, alternatively, it may be provided externally to the adaptable surface (e.g. as part of a system).

Therefore, in embodiments of the disclosure, the adaptable surface may further comprise a receiver configured to receive instructions indicative of the in-game conditions from a remote device. Alternatively, for example, the adaptable surface may further comprise a receiver configured to receive instructions indicative of an adaption of the adaptable surface generated in response to in-game conditions. These instructions may also be received from a remote device.

In examples, the one or more physical parameters of the first surface may be global values, corresponding to the entire adaptable surface. In examples, the one or more physical parameters may be regional values, corresponding to a specific region of the adaptable surface. Thus, different regions of the adaptable surface may exhibit different physical properties.

In examples, the in-game conditions may include a type of videogame (such as a type or genre of videogame being played on the entertainment system), a level of a videogame (such as a current level of the videogame being played by a user on the entertainment system) a videogame event (such as an event relating to a character controlled by the user in the videogame being played on the entertainment system, wherein the even includes an event such as the death of the character, an interaction between the character and another object within the videogame environment or the like), or an environment within a videogame (such as a given terrain being navigated by a character controlled by the user within a videogame being played by the user on the entertainment system). In examples, the in-game condition may include a difficulty setting of the videogame. Consider an example whereby a user is playing a videogame on an entertainment system which requires the user to perform a certain movement in the real-world in order to cause a certain action to be performed within the videogame. By changing the resistance to deformation of the adaptable surface, the effort required to perform a certain movement in the real-world can also be adapted. For example, by increasing the resistance to deformation, the effort required to perform a movement which requires pushing against the deformable surface can be increased. This can increase the difficulty in playing the videogame.

In examples, the adaptable surface may form a signal sender (an input device). That is, the adaptable surface may be configured in order to generate a signal in response to a certain condition and may be further configured to provide that signal to an external device (such as the entertainment system). For example, the adaptable surface may be configured in order to generate a signal in accordance with an interaction between the adaptable surface and the user, thus enabling the user to use the adaptable surface as an input device in order to control the videogame. Consider a situation whereby a videogame is being played on the entertainment system. In this example, a user may have a certain character within the videogame which they can control. According to embodiments of the disclosure, the user may interact with the adaptable surface in the real-world in order to control their character within the videogame environment. For example, the user may shift their weight to the left on the adaptable surface in order to cause their character in the videogame environment to move to the left. The one or more physical parameters of the adaptable surface may be adapted in order to change the difficulty in performing a certain movement (input). The difficulty in performing a certain movement (input) may be increased depending on the specific environment within the videogame (e.g. the terrain being navigated over) a difficulty setting, a current level of the videogame, a condition of the character within the videogame (whether the character is injured or tired) or the like. In examples, the user may progress through the videogame only when they are able to appropriately perform a certain input (movement) at a certain difficulty level (i.e. with a certain physical configuration of the adaptable surface). Thus, in examples, the adaptable surface (or entertainment system) may validate the appropriateness of the user's movement execution to progress through the level and/or to reward the user.

In other words, in embodiments, the adaptable surface may form a (physical) input device configured to generate a single in response to an interaction with a user. By changing the one or more physical parameters of the adaptable surface, the difficulty in performing a certain input (through a corresponding interaction between the adaptable surface and the user) can be controlled. This enables the adaptable surface to provide a flexible input device for which the difficult of performing a certain input can be adapted to replicate a certain condition within the videogame. This can further increase the sense of immersion when playing a videogame.

In examples, the adaptable surface may form, or be included, in any object with which a user playing a videogame on an entertainment system makes a physical contact in the real world. For example, the adaptable surface may be included as, or form part of, a controller held by the user. In examples, the adaptable surface may be included as, or form part of, a surface upon which the user sits or stands. In examples, the adaptable surface may be included as, or form part of, an item worn by the user while the user is playing the videogame. Therefore, it will be appreciated that the specific implementation of the adaptable surface is not particularly limited in accordance with embodiments of the disclosure.

In examples, the adaptable surface may be provided as part of a system. The system may comprise the adaptable surface as described with reference to Figure 3 of the present disclosure. Furthermore, the system may comprise a determining unit configured to determine an adaptation of the adaptable surface based on the in-game conditions. For example, the determining unit may determine that the adaptable surface should be adapted in order to reflect a particular in-game condition or environment. The control unit as previously described is an example of the determining unit.

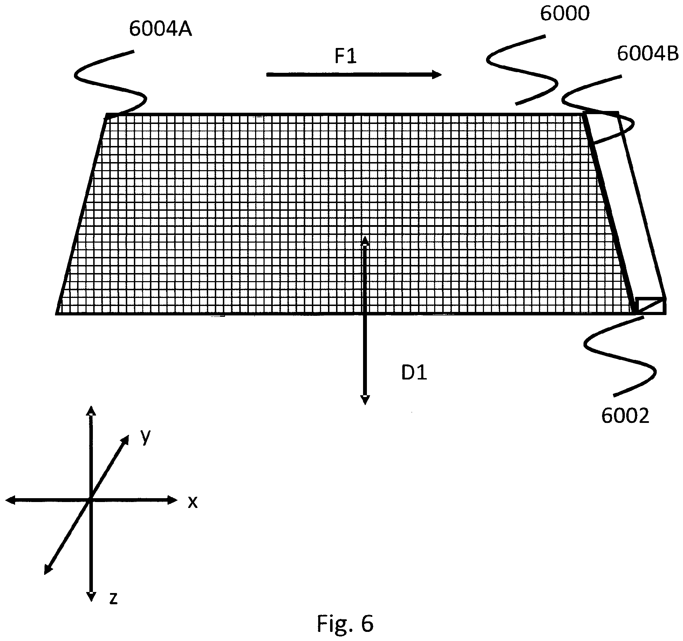

The system may also include an adaptation implementation unit, configured to perform the determined adaptation of the adaptable surface. For example, the adaption unit may increase or decrease the tension of the adaptable surface in order to change the resistance to deformation of the adaptable surface (based on the adaptation determined by the determining unit). Further details of the adaptation implementation unit will be provided later with reference to Figure 6 of the present disclosure.

Thus, embodiments of the disclosure provide a system comprising: an adaptable surface, the adaptable surface comprising: a first surface layer having one or more physical parameters adaptable in response to in-game conditions, wherein the one or more physical parameters include at least a resistance to deformation of the adaptable surface; and wherein the system further comprises a determining unit configured to determine an adaption of the adaptable surface based on the in-game conditions; and an adaptation implementation unit configured to perform the determined adaptation of the adaptable surface.

By adapting one or more physical parameters of the first surface of the adaptable surface in this manner, improved physical feedback can be provided, increasing the sense of immersion of a user. Moreover, this physical feedback can be provided by a device which is less bulky and expensive than a conventional feedback device. Further details of the adaptable surface will now be provided with reference to an example situation.

### <Example Situation>

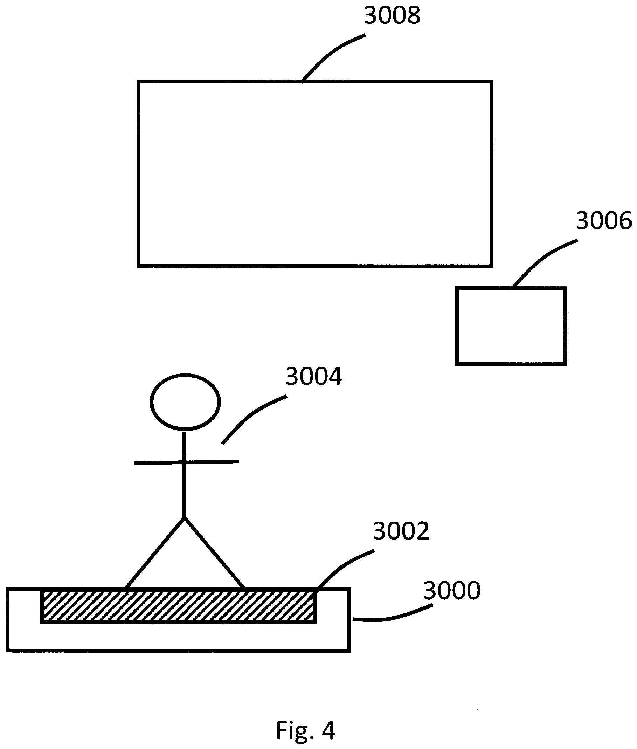

Consider, now, Figure 4 of the present disclosure. Figure 4 of the present disclosure illustrates an example situation in accordance with embodiments of the disclosure.

In this example situation, a person (hereinafter the player) is playing a videogame on an entertainment system, while using an adaptable surface such as that described with reference to Figure 3 of the present disclosure.

More specifically, in this example, the adaptable surface 3000 is, or forms part of, a surface upon which the player 3004 stands while playing a videogame on the entertainment system 3006 (which is an example of an entertainment system 10 as described with reference to Figure 2 of the present disclosure). In particular, the player 3004 stands upon the first surface 3002 of the adaptable surface 3000.

In this example, the videogame content is displayed to the player 3004 on a display device 3008, such that the player 3004 can see the content of the videogame. In this specific example, the display device 3008 is a display device such as a television. However, the present disclosure is not particularly limited in this regard. In examples, the display device may be any type of device which enables the player to see the content of the videogame. For example, the display device may include a virtual reality headset (such as the HMD 120 described with reference to Figure 2 of the present disclosure), for example. Accordingly, it will be appreciated that the present disclosure is not particularly limited to the specific example display device described in this example.

In this example, the player 3004 is playing an action videogame. In the action videogame, the player 3004 controls a character within a virtual world (or environment) within the videogame. The character can be controlled, by the player 3004, such that the character moves around the virtual world. As the character moves through the virtual world, under the control of the player 3004, they may encounter a number of different types of surface within the virtual world. For example, in some situations, the character may be moving over a floor such as a carpet. In other situations, the character may be moving over a floor such as stone. In other examples, the character may be moving over a floor such as sand.

In this example, the one or more physical parameters of the adaptable surface are adapted in accordance with the type of surface over which the character controlled by the player is moving (which is an example of an in-game condition in accordance with embodiments of the disclosure).

That is, in this example, the videogame system 3006 sends information to the adaptable surface 3000 concerning either the in-game condition and/or a value or setting of the one or more physical parameters of the surface. Then, the adaptable surface 3000 is configured to control the first surface layer 3002 in response to this information from the entertainment system 3006 to adapt one or more physical parameters of the surface.

For example, when the character controlled by the player 3004 is moving on a surface such as carpet, the one or more physical parameters of the surface may be adapted in order that the player 3004 receives a physical feedback representative of this surface. For example, the one or more physical parameters of the surface may be adapted in order to change at least a resistance to deformation of the adaptable surface. In the example whereby the character controlled by the user is moving on a softer surface such as carpet within the videogame, the adaptable surface may therefore be adapted to reduce a resistance to deformation of the adaptable surface - thus increasing the softness of the surface upon which the player is stood in the real world (physical environment). The player 3004 will then experience the sensation as though they were stood on a same type of surface as their character in the videogame. This further increases a sense of immersion experienced by the player.

In examples, the information sent to the adaptable surface from the entertainment system may form an adaptation input request. The adaptation input request may include a Physically Based Rendering (PBR) roughness texture or a bump map that takes brightens values to control the patter of the adaptable surface's resistance spatially and/or temporally. In this way, varying levels and/or types of physical parameters may be applied across the adaptable surface (as described in more detail later).

On the other hand, when the character controlled by the player 3004 is moving on a surface such as stone, the one or more physical parameters of the adaptable surface may be adapted in order that the player 3004 receives a physical feedback representative of this surface. Since stone is a hard surface, in examples, the resistance to deformation of the adaptable surface may be increase - thus increasing the hardness (decreasing the softness) of the surface upon which the player is stood in the real world (physical environment). Again, this means that the player 3004 will then experience the sensation as though they were stood on a same type of surface as their character in the videogame. This further increases a sense of immersion experienced by the player.

Thus, in this example, a tailored walking-related sensation for different in-game terrains can be provided through the adaptable (or variable) surface of the present disclosure.

While the example of Figure 4 is described with an example whereby the physical parameters are adapted in accordance with the terrain upon which the character controlled by the player is stood, it will be appreciated that the present disclosure is not particularly limited in this regard. In examples, control of the one or more physical parameters of the surface may be performed in response to any suitable in-game condition.

In some examples, the one or more physical parameters of the adaptable surface may be dynamically adapted in response to an interaction with the adaptable surface. For example, the adaptable surface may include a sensing unit configured to sense an interaction with the adaptable surface. In examples, the sensing unit may sense an interaction with the adaptable surface from one of more images of the adaptable surface. The one or more images of the adaptable surface may be captured by an imaging device included in the adaptable surface. In other examples, the one or more images may be captured by an external imaging device (e.g. an imaging device of the entertainment system). In examples, the sensing unit may include a device such as a pressure sensing device. In examples, the sensing unit may include a device such as a capacitance device. In general, any type of sensing device can be used in order to sense an interaction with the adaptable surface depending on the situation to which the embodiments of the disclosure are applied.

An interaction with the adaptable surface can include a manner by which a player makes a contact with the adaptable surface. In examples, an interaction can include a way in which a person stands when playing the videogame. The way in which the player stands when playing the videogame can include a way in which the weight of the player is distributed on the adaptable surface when playing the videogame, for example.

While a user standing on the adaptable surface provides one example of an interaction with the adaptable surface, it will be appreciated that the present disclosure is not particularly limited in this respect. More generally, in examples, the effect of improved physical feedback may be realised when the surface is in contact with the user; this can include continuous contact with the user (e.g. while the user is standing on the surface) or periodic contact with the user (e.g. where the user is, say, jumping on the surface, such that there are periods of time with which contact between the user and the surface is made and periods of time with which there is no contact between the user and the surface).

In some examples, the resistance to deformation of the adaptable surface may be changed to increase or decrease the softness of the surface based on the interaction with the adaptable surface. For example, if a player pushes forcefully against the surface (e.g. a stamping action) then the hardness of the surface may be increase to oppose this interaction.

A user profile may be used to modify the deformation that is applied; this may be based upon user preferences or physical parameters of the user. For instance, a user's weight and/or shoe size may be measured (or input by a user) to indicate how much pressure they would apply to a portion of the surface when standing. Similarly, a user may indicate a desire to avoid standing on an above-threshold hardness of surface if they have medical issues with their knees or ankles that could be magnified by such an interaction. These are examples of specific user details being used to provide a tailored user experience, thereby increasing their wellbeing and/or the immersiveness of their experience.

Accordingly, in examples, the one or more physical parameters are further modified in response to a condition with which the person stands on the surface.

While the example of Figure 4 is described with reference to a situation where the player is stood upon the first surface layer of the adaptable surface, it will be appreciated that the present disclosure is not particularly limited in this regard. More generally, the adaptable surface may be formed as part of any surface with which the player will come into contact when playing the video game. In examples, the adaptable surface may formed as part of an object with which the hand of the player will come into contact when playing the video game. For example, the adaptable surface may be formed as part of a controller which is held by the player when playing the video game. Adaptation of the one of more physical parameters of the surface in response to the in-game conditions can then enable the player to feel a feedback from the adaptable surface. As an example, if - in the videogame - the character controlled by the player picks up an object which is very soft (such as an item of clothing) the physical parameters of the adaptable surface may be adapted such the player in the real world (physical environment) feels as though they are holding a very soft item. On the other hand, if - in the videogame - the character controlled by the player picks up an object which is very hard (such as a metal sword) the physical parameters of the adaptable surface may be adapted such that the player in the real world (physical environment) feels as though they are holding a very hard item.

In this way, improved physical feedback can be provided, increasing the sense of immersion of a user.

### <Mesh Surface>

As previously explained, embodiments of the present disclosure provide an adaptable surface for an entertainment system, the adaptable surface comprising a first surface layer having one or more physical parameters adaptable in response to in-game conditions, wherein the one or more physical parameters include at least a resistance to deformation of the adaptable surface.

It will be appreciated that the way in which the one or more physical parameters of the first surface layer of the adaptable surface are adapted in response to the in-game conditions is not particularly limited in accordance with embodiments of the disclosure.

However, in examples, the first surface layer may be provided as a mesh surface. Furthermore, in examples, a resistance to deformation of the adaptable surface may then be adapted by changing a tension applied to the first surface. More generally, however, the adapting unit configured to perform adaptation of the one or more physical parameters of the first surface layer in response to the in-game conditions.

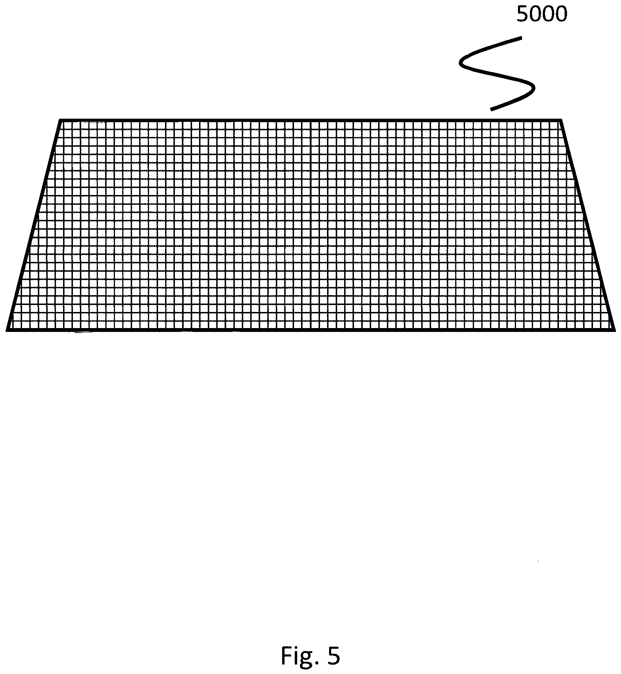

Consider, now, Figure 5 of the present disclosure. Figure 5 illustrates a first layer of an adaptable surface in accordance with embodiments of the disclosure.

In the example of Figure 5, only a first surface layer 5000 of the adaptable surface is shown. However, this first surface layer 5000 forms a part of an adaptable surface in accordance with embodiments of the disclosure.

In this example, the first surface layer is formed as a mesh surface. That is, in this example, the first surface layer 5000 of the adaptable surface comprises a mesh surface.

In the example of Figure 5, the mesh is formed as interlaced strands of a material. In this example, the individual "cells" of the mesh are a square shape. However, the present disclosure is not particularly limited in this regard. The shape of the individual "cells" of the mesh may be any shape, depending on the situation to which the embodiments of the disclosure are applied. Furthermore, while a specific number of "cells" are shown in the mesh of Figure 5, it will be appreciated that the present disclosure is not particularly limited in this regard. More generally, any number of "cells" may be formed in the mesh, having any suitable size in accordance with a situation to which the embodiments of the disclosure are applied.

In examples, the mesh may be formed of a material such as a metal. However, the present disclosure is not particularly limited in this regard. In examples, the mesh may be formed of strands of a fibre. Indeed, in examples, any suitable flexible or ductile material may be used in order to form the mesh of the first surface layer.

When formed as a mesh, the resistance to deformation of the first surface layer may be changed by changing a tension applied to the first surface. For example, when the mesh surface is under high levels of tension, the mesh will be held taut. This means that the resistance to deformation will be high. Accordingly, if an object (such as a foot of a player) pushes against the mesh surface, then that object will encounter a high level of resistance. In the case where the object is a foot of a player, this means that the player will feel as though they are pushing against a very hard surface. On the other hand, when the tension applied to the first surface is decreased, the mesh will become slack. This means that the resistance to deformation will be low. Accordingly, if an object (such as a foot of a player) pushes against the mesh surface, then that object will encounter a low level of resistance. In the case where the object is a foot of a player, this means that the player will feel as though they are pushing against a very soft surface.

Thus, in examples, an adapting unit may be provided as part of the adaptable surface, the adapting unit being configured to change a tension applied to the first surface in order to adapt a resistance to deformation of the adaptable surface. In examples, the adapting unit may be provided external to the adaptable surface, in part of a system comprising the adaptable surface. Therefore, the adapting unit is an example of the adaptation implementation unit as previously described.

The nature of the adapting unit is not particularly limited in accordance with embodiments of the disclosure. That is, the implementation of the adapting unit for adapting a tension of the first surface is not particularly limited and may change depending on the situation to which the embodiments of the disclosure are applied.

However, in examples, the adapting unit may be provided in the form of a unit configured to apply a tension to one or more edges of the mesh surface.

Consider, now, Figure 6 of the present disclosure. Figure 6 of the present disclosure illustrates a first layer 6000 of an adaptable surface in accordance with embodiments of the disclosure.

The first surface layer of the adaptable surface 6000 illustrated in Figure 6 of the present disclosure is the same as the first surface layer 5000 which has been described with reference to Figure 5 of the present disclosure. Accordingly, a further repetition of the details of this first surface layer of the adaptable surface will not be made at this stage for brevity of the disclosure.

However, in addition to this first surface layer 6000 (i.e. the mesh surface), it will be appreciated that the example of Figure 6 further includes an adapting unit 6002.

The adapting unit 6002 is configured to adapt a tension of the first surface layer 6000 which thus changes a resistance to deformation of the first surface layer 6000.

Indeed, in this example, the first surface 6000 is retained at a fixed position along a first edge 6004A. The first surface may be retained at a fixed position along the first edge 6004A by any suitable retaining means. For example, the first surface may be retained along the first edge 6004A by application of a retaining means such as a clamp, which holds the first edge 6004A at a fixed position on the adaptable surface. Furthermore, in this example, the adapting unit 6002 is configured to adapt the tension applied to the first surface by applying a force to an edge of the first surface opposing the first edge (here, the edge 6004B). Since the first edge 6004A is retained at a fixed position, the tension in the first surface 6000 can be adapted in dependence on the force which is applied to the second edge 6004B of the adaptable surface.

For example, by applying a force in the direction F1 along the first surface layer (in a direction moving away from the edge 6004A to edge 6004B) the adapting unit can pull the first surface layer against the retaining means, which increases a tension in the first surface layer. Accordingly, when a force is applied in the direction F1 by the adapting unit 6002, the resistance to deformation in the direction D1 of the first surface layer increases (as the first surface layer 6000 is held under an increased level of tension).

However, by relaxing the force which is being applied to the first surface layer, the adapting unit can reduce the force by which the first surface layer is pulled against the retaining means. This decreases a tension in the first surface layer. Accordingly, as the force applied by the adapting unit 5002 to the first surface layer decreases, the resistance to deformation of the first surface layer in the direction D1 decrease (as the first surface layer 6000 is held under a decreased level of tension).

In this way, improved physical feedback can be provided by adapting a physical parameter (such as resistance to deformation) of the first surface layer, which increases the sense of immersion of a user. Moreover, this physical feedback can be provided by a device which is less bulky and expensive than a conventional feedback device (which may require application of hydraulic or pneumatic pistons or rams, for example).

In examples, the adapting unit 6002 may be a motorized unit configured to apply a force to the second edge 6004B of the first surface layer. In examples, the motor may be any suitable type of motor including a DC motor, an AC motor, an induction motor, a stepper motor, a brushless motor, or a linear motor, or the like.

In examples, the adapting unit 6002 may be configured as a mechanical roller. In examples, the mechanical roller may roll the first surface layer to give or take slack within the first surface layer.

An adapting unit 6002 such as the mechanical roller described with reference to Figure 6 of the present disclosure enables the resistance to deformation of the adaptable surface to be adapted very easily and efficiently, without increasing the size or complexity of the adaptable surface.

In some implementations it is considered advantageous that individual portions of the mesh are able to be manipulated individually - for instance, by providing a pair of motors as the adapting unit 6002, it is possible to apply a force to half the mesh only. Similarly, alternative means can be provided which enable each strand (or a subset of the strands) of the mesh to be manipulated independently. This can create a non-uniform manipulation of the surface, so as to create a varied surface in respect of physical parameters. For example, by making a portion of the mesh feel very hard while another portion is made to feel soft the effect of a user standing partially on stone and partially on carpet (or any other hard/soft surfaces) can be simulated. In examples, the individual portions of the mesh may be manipulated individually in accordance with the adaptation input request (including, for example, an input request comprising a PBR-based roughness texture or bump map as previously described). Thus, varying levels and/or types of physical parameters may be applied across the adaptable surface.

In such implementations, the different portions of the mesh may not be completely independent due to the strands being connected; however it may be preferable in such cases that the mesh is instead provided by a plurality of independent strands which provide the effect of a mesh without being configured as one. These independent strands can be provided entirely independently of one another, or may be interleaved or the like to provide some base level of tension to the mesh structure as appropriate.

As noted above, the shape of the mesh may be varied freely as is desired for a given implementation; by changing the arrangement of the strands of the mesh different shapes and/or physical effects can be realised by manipulation of the strands. It is also considered that the arrangement of the strands need not be uniform - for instance, a strand density may be higher in the centre of the layer than on the periphery so as to reflect the likelihood of a user interacting with that portion of the mesh.

### <Second Surface Layer>

An adaptable surface of the present disclosure has been described with reference to Figure 3. The adaptable surface described with reference to Figure 3 of the present disclosure included a first surface layer 3002. However, in embodiments of the disclosure, one or more additional surface layers may be included in addition to this first surface layer.

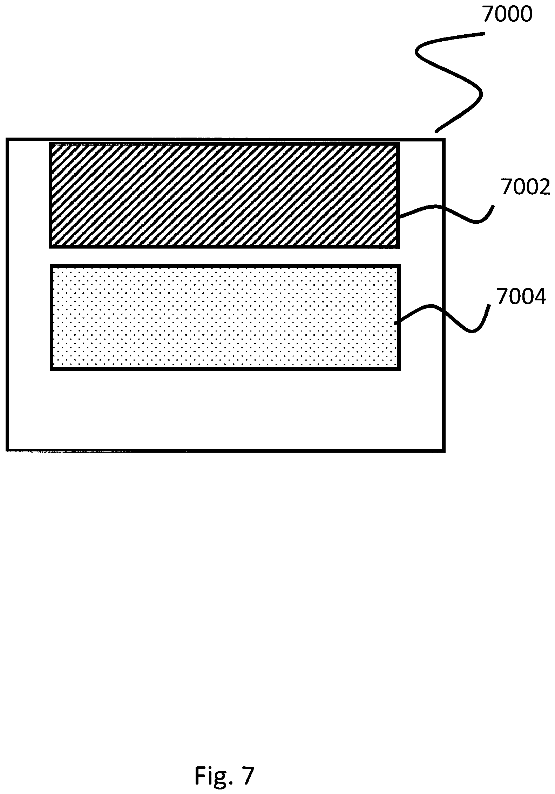

Consider, now, Figure 7 of the present disclosure. Figure 7 of the present disclosure illustrates an adaptable surface in accordance with embodiments of the disclosure.

The adaptable surface 7000 illustrated in Figure 7 is an adaptable surface for an entertainment system (such as the entertainment system 10 as described with reference to Figure 2 of the present disclosure). The adaptable surface 7000 comprises a first surface layer 7002 having one or more physical parameters adaptable in response to in-game conditions, wherein the one or more physical parameters include at least a resistance to deformation of the adaptable surface.

The first surface layer 7002 of the adaptable surface of Figure 7 of the present disclosure is the same as the adaptable surface 3002 as described with reference to Figure 3 of the present disclosure. Therefore, further details of the adaptable surface will not be provided at this stage for brevity of the disclosure.

However, in addition, the adaptable surface 7000 comprises a second surface layer 7004. The second surface layer is provided below the first surface layer 7002. Accordingly, a contact made by a person touching the adaptable surface 7000 is made with the first surface layer 7002.

Indeed, in embodiments, the second surface layer is arranged beneath the first surface layer and is configured to change a topology of the first surface layer.

That is, as has been described, the first surface layer is a flexible layer of the adaptable surface with which a person can make contact. One or more physical parameters of the first surface layer are adaptable in response to in-game conditions. For example, the resistance to deformation of the adaptable surface can be modified. This makes the first surface layer exhibit an increased or decreased level of flexibility (hardness) in response to the in-game conditions.

However, the second surface layer is a layer which is configured to change the topology of the first surface layer. In examples, the first surface layer may be a flat surface (until pressed). In examples, the first surface layer may have a surface topology other than a flat surface. For example, the first surface layer may have an undulating surface topology, with certain raised or depressed portions. The topology of the first surface layer can be changed through operation of the underlying second surface layer. That is, in examples, the first surface layer can be configured to lie on top of the second surface layer, with the second surface layer being arranged below the first surface layer. Therefore, by raising or lowering certain portions of the second surface layer, the topology of the first surface layer can be changed.

In examples, the adaptable surface can include a second adaption unit configured to adapt a configuration of the second surface layer. This provides an efficient way of changing the topology of the first surface layer (which lies on the second surface layer).

In examples, the second adaptation unit is configured to raise or lower one or more portions of the second surface layer to change a configuration of the second surface layer.

In examples, the second surface layer may be configured with a piezoelectric material. The second adaptation unit may then adapt the shape of the second surface layer by applying an electric current to the second surface layer. However, in examples, the second adaptation unit may include one or more actuation devices to adapt the shape of the second surface layer through application of a force to the second surface layer. Accordingly, the present disclosure is not particularly limited in this respect.

In examples, the second surface layer may be configured in order to change the topology of the first surface layer in response to one or more in-game conditions.

Consider an example such as that described with reference to Figure 4 of the present disclosure, where a person (player 3004) is playing a videogame on an entertainment system 3006. In this example, the adaptable surface is arranged such that it forms a surface upon which the player 3004 stands when playing the videogame. In other words, the player's feet make a contact with the first surface layer of the adaptable surface when playing the videogame.

As previously explained, the resistance to deformation of the first surface layer (and thus the adaptable surface) may be changed on the basis of the in-game conditions in order that the player experiences a physical sensation (feedback) which reflects the in-game condition. For example, when the player 3004 is controlling a character in the videogame who is moving over a soft surface, the resistance to deformation of the first surface layer may be low. Therefore, the player will feel as though they are stood upon a soft surface in the real world matching the surface upon which the character stands in the videogame.

Furthermore, in examples of the disclosure, the topology of the first surface layer may be changed on the basis of the in-game conditions as described above. For example, the topology of the first surface layer (and thus the adaptable surface) may be changed on the basis of the in-game conditions in order that the player experiences a physical sensation (feedback) which reflects the in-game condition. For example, when the player is controlling the character in the videogame such that the character moves across a flat surface, the topology of the first surface layer may be changed such that it matches the in-game surface (i.e. the topology may be changed to a flat topology). On the other hand, when the player is controlling the character in the videogame such that the character moves across an undulating surface, such as rough terrain, the topology of the first surface layer may be changed such that it matches the in-game surface.

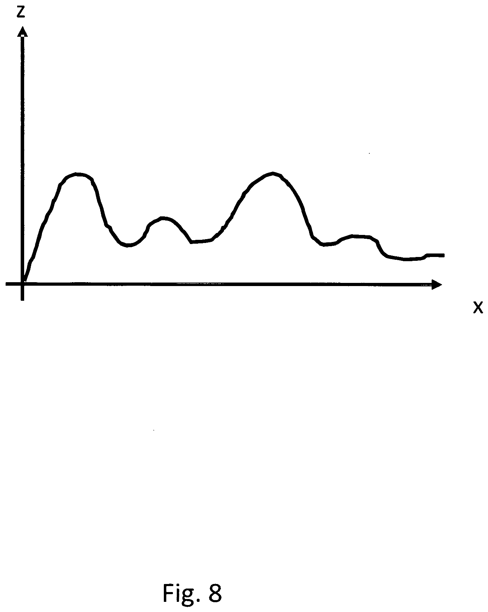

Figure 8 of the present disclosure illustrates a surface topology in accordance with embodiments of the disclosure. The example topology illustrated in Figure 8 of the present disclosure is an example topology which may be used to reflect an undulating surface, for example. However, while one specific example of a topology is shown in Figure 8 of the present disclosure, it will be appreciated that the present disclosure is not particularly limited in this regard. More generally, the topology of the first surface layer may be changed in order to reflect any surface upon which a character moves in the videogame or any other in-game condition.

In this way, improved physical feedback can be provided, increasing the sense of immersion of a user.

### <Deformable Cells>

As has been described, in examples, the one or more physical parameters of the first surface layer are adaptable in response to in-game conditions. Indeed, in examples, the resistance to deformation of the first surface may be adapted by changing a tension applied to the first surface in response to in-game conditions. However, the present disclosure is not particularly limited in this regard.

In examples, the one or more physical parameters of the first surface layer may be adaptable through application of one or more deformable cells of the first surface layer.

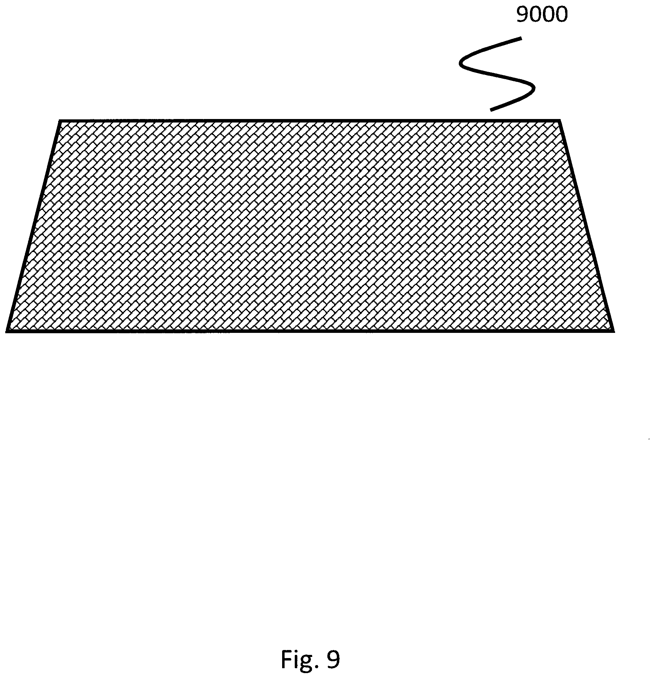

Consider, now, Figure 9 of the present disclosure. Figure 9 illustrates a first surface layer in accordance with embodiments of the disclosure. The first surface layer of Figure 9 may be used in an adaptable surface according to embodiments of the disclosure.

In this example, the first surface layer 9000 comprises a plurality of deformable cells. Each cell is an individual cell which can be controlled independently from the other cells of the first surface layer 9000. The number of deformable cells of the first surface layer 9000 is not particularly limited to the number of deformable cells illustrated in the example of Figure 9 of the present disclosure. The number of cells may be much more than the number of cells in this example. Furthermore, in examples, a single deformable cell may be provided.

Moreover, the shape and arrangement of the deformable cells is not particularly limited to the shape and arrangement of the deformable cells illustrated in the example of Figure 9 of the present disclosure. Indeed, while the deformable cells of Figure 9 of the present disclosure are uniform in shape and size, it will be appreciated that the present disclosure is not particularly limited in this respect. More generally, the deformable cells may be non-uniform in shape and size.

The cells may be made from vinyl, PVC, or any suitable airtight deformable material to allow the cells to deform in response to the combination of their internal pressure and the force applied to them by (e.g. by a person standing on it). Furthermore, one or more of the plurality of deformable cells comprise a solenoid release valve allowing air to be released from the cell. One or more of the cells also comprise a solenoid feed valve allowing air to be fed into the cell. Of course, rather than specifically air it is considered that any suitable fluid may be utilised - and in some cases a device may be compatible with multiple fluids having different physical properties, with the fluid to be used at a given time being selected in dependence upon those physical properties.

By allowing air to be fed into or released out of the cells, the pressure within each of the deformable cells can be adapted. For example, the pressure within a deformable cell can be increased by allowing air to be fed into the cell. The change in pressure changes the physical parameters of the first surface. For example, by increasing the pressure within one or more of the deformable cells, the resistance to deformation of the adaptable surface can be increased (making the adaptable surface feel harder). On the other hand, by decreasing the pressure within the one or more deformable cells, the resistance to deformation of the adaptable surface can be reduced (making the adaptable surface feel softer).

Accordingly, in examples, the first surface layer includes a reconfigurable portion comprising an array of deformable cells, wherein the adaptable surface controls a gas inflow and a gas outflow from respective deformable cells to modify a resistance to deformation of the adaptable surface.

The one or more deformable cells may be adapted in response to the in-game conditions in a similar way as has been described with reference to Figure 4 of the present disclosure. For example, the one or more deformable cells may be controlled to change a resistance to deformation of the first surface to reflect a type of surface over which a character is moving within the videogame. Alternatively, the resistance to deformation may be adapted in accordance with any other type of in-game condition.

### < Protective Coating >

While a number of different configurations of the adaptable surface have been described, it will be appreciated that the present disclosure is not particularly limited to these specific examples.

Indeed, while an adaptable surface having a first surface layer and an adaptable surface having a first and second adaptable surface have been described, it will be appreciated that the present disclosure is not particularly limited in this respect. Indeed, one or more additional layers may also be provided as part of the adaptable surface in accordance with embodiments of the disclosure.

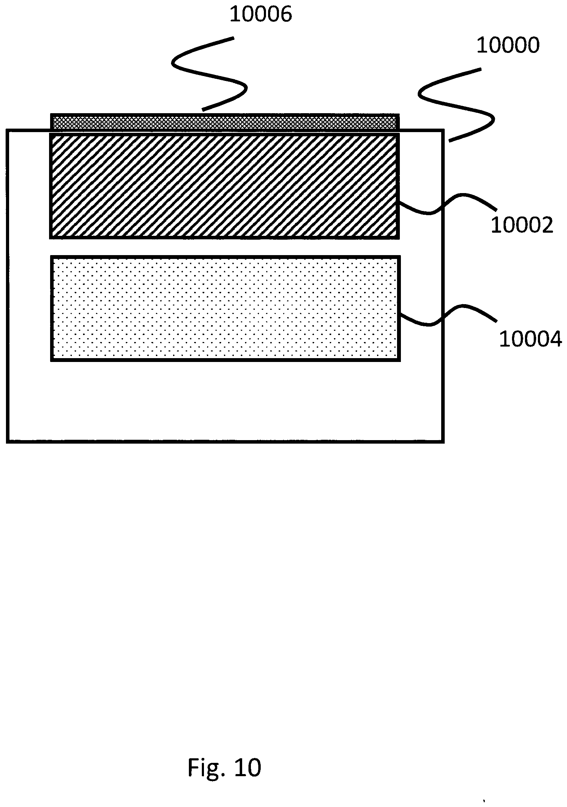

Consider, now, Figure 10 of the present disclosure. Figure 10 illustrates an adaptable surface in accordance with embodiments of the disclosure.

In this example, the adaptable surface 10000 comprises a first surface layer 10002, a second surface layer 10004 and a third layer 10006. In this example, the third layer 10006 forms a protective coating over the first surface layer 10004.

The protective coating may comprise a thin layer of a durable material which can be provided over the first surface layer 10002 in order to protect the first surface layer 10002 from damage. The material used to form the protective coating is not particularly limited in accordance with embodiments of the disclosure. In examples, the protective coating may include a flexible material, such as a flexible plastic material. The flexible material may protect the first surface layer 10002 from damage, while enabling a person to experience a change in the one or more physical properties of the adaptable surface from adaptation of the first and/or second surface layer.

While the example of Figure 10 is described with reference to an example situation of an adaptable surface comprising the first and second surface layer, it will be appreciated that the present disclosure is not particularly limited in this regard. More generally, the protective coating may be applied to any adaptable surface of the present disclosure. For example, the protective coating may be applied to an adaptable surface such as the adaptable surface illustrated with reference to Figure 3 of the present disclosure, which does not include a second surface layer.

Furthermore, it will be appreciated that numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. An adaptable surface for an entertainment system, the adaptable surface comprising:
a first surface layer having one or more physical parameters adaptable in response to in-game conditions, wherein the one or more physical parameters include at least a resistance to deformation of the adaptable surface.

2. The adaptable surface according to claim 1, wherein the first surface layer comprises a mesh surface.

3. The adaptable surface according to claim 1 or claim 2, further comprising an adapting unit configured to perform adaptation of the one or more physical parameters of the first surface layer in response to the in-game conditions.

4. The adaptable surface according to any preceding claim, further comprising an adapting unit configured to change a tension applied to the first surface in order to adapt a resistance to deformation of the adaptable surface.

5. The adaptable surface according to claim 4, wherein the first surface layer is retained at a fixed position along a first edge and wherein the adapting unit is configured to adapt the tension applied to the first surface by applying a force to an edge of the first surface opposing the first edge.

6. The adaptable surface according to claim 4, wherein the adapting unit comprises a mechanical roller.

7. The adaptable surface according to any preceding claim, further comprising a second surface layer arranged beneath the first surface layer, the second surface layer being configured to change a topology of the first surface layer.

8. The adaptable surface according to claim 7, wherein the adaptable surface includes a second adaptation unit configured to adapt a configuration of the second surface layer.

9. The adaptable surface according to claim 8, wherein the second adaptation unit is configured to raise or lower one or more portions of the second surface layer to change a configuration of the second surface layer.

10. The adaptable surface according to any preceding claim, wherein i) the in-game conditions include a type of videogame, a level of a videogame, a videogame event, or an environment within a videogame; or ii) wherein the one or more physical parameters are dynamically adapted in response to an interaction with the adaptable surface.

11. The adaptable surface according to any preceding claim, wherein the adaptable surface is provided a playing surface upon which a person stands when playing the videogame; or wherein the adaptable surface further includes an input device configured to generate an input signal in response to an interaction with a user.

12. The adaptable surface according to claim 11, wherein the one or more physical parameters are further modified in response to a condition with which the person stands on the surface.

13. The adaptable surface according to any preceding claim, further comprising i) a receiver configured to receive instructions indicative of the in-game conditions from a remote device; or ii) a receiver configured to receive instructions indicative of an adaption of the adaptable surface generated in response to in-game conditions; or iii) a protective coating applied to the first surface layer of the adaptable surface.

14. The adaptable surface according to any preceding claim, wherein the first surface layer includes a reconfigurable portion comprising an array of deformable cells, wherein the adaptable surface controls a fluid inflow and a fluid outflow from respective deformable cells to modify a resistance to deformation of the adaptable surface.

15. A system comprising:
an adaptable surface, the adaptable surface comprising:
a first surface layer having one or more physical parameters adaptable in response to in-game conditions, wherein the one or more physical parameters include at least a resistance to deformation of the adaptable surface;
and wherein the system further comprises:
a determining unit configured to determine an adaption of the adaptable surface based on the in-game conditions; and
an adaptation implementation unit configured to perform the determined adaptation of the adaptable surface.
